(19) Europäisches Patentamt European Patent Office Office européen des brevets

(11) **EP 2 594 969 B1**

(12) **FASCICULE DE BREVET EUROPEEN**

(45) Date de publication et mention
de la délivrance du brevet:
**23.07.2014 Bulletin 2014/30**

(51) Int Cl.:
***G01V 11/00*** *(2006.01)*

(21) Numéro de dépôt: **12290357.8**

(22) Date de dépôt: **18.10.2012**

(54) **Procédé d'exploration d'un bassin sédimentaire à partir d'une simulation stratigraphique**

Untersuchungsverfahren eines Sedimentbeckens mit Hilfe einer stratigrafischen Simulation

Method for exploring a sedimentary basin with a stratigraphic simulation

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.11.2011 FR 1103500**

(43) Date de publication de la demande:
**22.05.2013 Bulletin 2013/21**

(73) Titulaire: **IFP Energies Nouvelles
92852 Rueil Malmaison Cedex (FR)**

(72) Inventeur: **Granjeon, Didier
92500 Rueil-Malmaison (FR)**

(56) Documents cités:
**EP-A1- 1 435 527     US-A- 5 844 799**

• **RABINEAU M ET AL: "Sedimentary sequences in
the Gulf of Lion: A record of 100,000 years
climatic cycles", MARINE AND PETROLEUM
GEOLOGY, BUTTERWORTH SCIENTIFIC,
GUILDFORD, GB, vol. 22, no. 6-7, 1 juin 2005
(2005-06-01), pages 775-804, XP027687505,
ISSN: 0264-8172 [extrait le 2005-06-01]**
• **GRANJEON D ET AL: "USING A 3-D
STRATIGRAPHIC MODEL TO OPTIMIZE
RESERVOIR DESCRIPTION", PETROLEUM
ENGINEER INTERNATIONAL, HART
PUBLICATIONS, US, 1 novembre 1998
(1998-11-01), pages 51-54,56, XP000831236,
ISSN: 0164-8322**
• **EYMARD R ET AL: "MULTI-LITHOLOGY
STRATIGRAPHIC MODEL UNDER MAXIMUM
EROSION RATE CONSTRAINT",
INTERNATIONAL JOURNAL OF NUMERICAL
METHODS IN ENGINEERING, CHICHESTER, GB,
vol. 60, no. 2, 14 mai 2004 (2004-05-14), pages
527-548, XP008043580, ISSN: 0029-5981, DOI:
10.1002/NME.974**
• **ROBIN C ET AL: "Expression and modelling of
stratigraphic sequence distortion",
SEDIMENTARY GEOLOGY, ELSEVIER,
AMSTERDAM, NL, vol. 178, no. 3-4, 15 juillet 2005
(2005-07-15), pages 159-186, XP027840035, ISSN:
0037-0738 [extrait le 2005-07-15]**

**Description**

L'invention concerne le domaine de l'industrie pétrolière, et notamment l'exploration pétrolière par l'étude de bassin sédimentaire. La méthode peut être utilisée dans tout domaine nécessitant une caractérisation de la géométrie et de la nature des couches composant un bassin sédimentaire en particulier (1) en exploration pétrolière lors de l'étude de zones frontières, de l'évaluation de nouveaux champs et de la caractérisation de réservoirs pétroliers, et (2) en stockage géologique de gaz et fluides, tels que le $CO_2$ ou l'hydrogène.

En particulier, l'invention a pour objet une méthode permettant de déterminer la distribution des sédiments fins et grossiers dans un bassin sédimentaire, sur des échelles de temps et d'espace importantes (durée de l'ordre de quelques milliers d'années à quelques centaines de millions d'années, distance horizontale de l'ordre de quelques dizaines à quelques centaines de kilomètres).

Les grandes tendances actuelles en exploration pétrolière sont d'une part de s'orienter vers des zones de plus en plus complexes (piedmonts des chaînes de montagnes, zones marines ultra-profondes, "shale gas", ...), et d'autre part d'optimiser la récupération des gisements déjà découverts. De même, l'on cherche de plus en plus à stocker des ressources ou des déchets dans des sites géologiques. Afin de répondre à ces deux objectifs, il est important de caractériser au mieux la distribution des sédiments au sein de bassin sédimentaire, et en particulier la distribution relative des sédiments grossiers et des sédiments fins. Ces deux types de sédiments jouent en effet un rôle majeur sur les propriétés d'écoulement des fluides dans les roches : les sédiments grossiers étant généralement perméables, et les sédiments fins imperméables. Une bonne caractérisation d'un bassin sédimentaire passe ainsi par une bonne compréhension de la stratigraphie du bassin, c'est-à-dire de la géométrie des couches sédimentaires et de la répartition des sédiments fins et grossiers au sein de ces couches.

Pour ce faire, les spécialistes utilisent des outils, notamment des outils informatiques (ordinateur, logiciel...) pour réaliser des simulations permettant d'obtenir une représentation (appelée simulation stratigraphique) décrivant l'architecture stratigraphique d'un bassin sédimentaire. Pour réaliser ces simulations, les spécialistes utilisent un outil qui permet de rendre compte de ces aspects de façon approchée : un modèle stratigraphique (numérique). Un modèle stratigraphique est un ensemble d'équations simulant l'évolution au cours des temps du bassin sédimentaire, suite à l'action de trois grands processus : (1) la création (ou la suppression), d'un espace disponible à la sédimentation par les mouvements tectoniques, eustatiques et flexuraux, (2) l'apport en sédiment dans le bassin, soit par les frontières, soit par l'intermédiaire d'une production ou d'une précipitation in situ, et (3) le transport de ces sédiments dans l'espace disponible créé.

Un tel outil (modèle stratigraphique) est mis en oeuvre dans un logiciel pour simuler de façon déterministe la réponse stratigraphique du système sédimentaire à des variations au cours du temps de processus physiques. Le logiciel DionisosFlow® (IFP Energies nouvelles, France) est un exemple d'un tel logiciel.

Deux grandes approches sont classiquement utilisées : (1) des approches géométriques et géostatistiques, dans lesquelles on définit manuellement ou mathématiquement la géométrie des horizons et la nature des roches, et (2) des approches déterministes basées sur une simulation des processus sédimentaires : la déformation du bassin, les apports en sédiments et le transport de ces sédiments dans le bassin. La présente invention contribue à la deuxième approche, généralement appelée modélisation stratigraphique directe ("stratigraphic forward modelling").

Ce type de modélisation stratigraphique est apparu dans le courant des années 1970, avec en particulier les travaux de Harbaugh et Bonham-Carter, 1970 qui ont proposé une série de modèles très simples. Ces travaux précurseurs (Tetzlaff et Harbaugh, 1989, Martinez and Harbaugh, 1993) ont donné naissance à de nombreux modèles stratigraphiques, généralement classés dans deux grandes familles : les modèles orientés processus ("process-based stratigraphic forward model"), et les modèles contrôlés par la pente du bassin ("slope-based stratigraphic forward model").

Les modèles orientés processus s'intéressent à l'évolution d'un système sédimentaire sur de courtes durées de temps, généralement de l'ordre de quelques années à quelques millénaires. Le premier d'entre eux est le modèle Sedsim (e.g. Tetzlaff et Harbaugh, 1989, Martinez and Harbaugh, 1993, Li *et al.*, 2006, Salles *et al.*, 2010) qui simule l'évolution des environnements clastiques et carbonatés peu profonds, ainsi que des environnements turbiditiques en domaine marin profond, et permet de déterminer l'architecture stratigraphique de réservoir et de formation sédimentaire de durées relativement longues (quelques années à quelques centaines de milliers d'années). Plus récemment, de nombreuses équipes se sont intéressées à la modélisation stratigraphique orientées processus (Driscoll et Kamer, 1999, Harris et Wiberg, 2001, Bitzer et Salas, 2002, Kubo *et al.*, 2005, Overeem *et al.*, 2005). Ces modèles s'intéressent à l'évolution d'un système sédimentaire sur des durées courtes (quelques dizaines de milliers d'années au maximum). Ils peuvent ainsi s'appuyer sur une description poussée des processus physiques, et en particulier de l'écoulement de l'eau en domaine fluvial ou en domaine marin. Ils peuvent ainsi simuler en détail des phénomènes transitoires, tels que l'écoulement d'un courant dense sur le fond marin, ou la migration de dunes de sables sous l'action d'une dérive littorale ou d'un courant marin. Cependant, ils ne s'intéressent généralement qu'à un seul environnement de dépôt, soit le domaine continental et fluviatile, soit le domaine deltaïque, soit le domaine marin profond, et composé de sédiments soit clastiques, soit carbonatés.

Les modèles contrôlés par la pente utilisent une description plus simple des processus physiques et supposent que le système sédimentaire est en équilibre dynamique, c'est-à-dire que l'écoulement de l'eau est stationnaire et que le transport des sédiments peut être décrit par une équation de diffusion, reliant le flux de sédiments transportés à la pente du bassin (d'où le nom de cette famille de modèle). Les premiers modèles diffusifs ont été développés pour étudier en 2 dimensions (x,z), l'évolution des chaînes de montagnes, ainsi que l'évolution des escarpements, des deltas et des marges clastiques. Les travaux les plus récents ont permis de montrer que l'utilisation d'une équation de diffusion en 3D permet de décrire correctement l'évolution des systèmes sédimentaires composés de sédiments grossiers (sables à graviers), tels que les cônes alluviaux, les deltas et les systèmes turbiditiques marins profonds, ainsi que les systèmes carbonatés et les systèmes mixtes clastiques et carbonatés). On connaît par exemple du brevet EP 1.435.527 une méthode de modélisation pour constituer un modèle stratigraphique de type diffusif en 2D ou 3D permettant de simuler le remplissage multilithologique d'un bassin sédimentaire sur des durées géologiques. Selon cette méthode, la modélisation repose sur la simulation numérique de l'évolution d'un bassin sédimentaire, du passé jusqu'au présent, en une série de pas de temps. A chaque pas de temps, trois phénomènes majeurs interagissent et sont modélisés numériquement : la déformation du bassin, l'apport de sédiments, et le transport de ces sédiments dans le bassin déformé. Pour modéliser le transport des sédiments, on prend en compte le transport permanent long terme (processus de reptation, de diffusion lente, etc.), celui à court terme (induit par des pluies et des crues), et les transports catastrophiques (suite à des effondrements de falaises notamment), en utilisant un modèle exponentiel de la vitesse de l'eau.

L'avantage majeur des modèles contrôlés par la pente est de permettre une modélisation rapide et réaliste de l'évolution des systèmes sédimentaires sur de grandes durées et de grandes distances. Ces modèles sont ainsi de plus en plus utilisés dans le monde pétrolier pour évaluer des scénarios d'exploration, ou mieux caractériser des systèmes pétroliers, et différentes approches ont été brevetées récemment, mais elles sont dédiées à de la modélisation de sédiments grossiers et ne prennent pas en compte les sédiments fins.

Ces différentes méthodes présentent certains inconvénients :

- les modèles stratigraphiques orientés processus ne permettent pas d'étudier l'évolution de systèmes sédimentaires sur des durées géologiques (quelques millions à centaines de millions d'années), du fait de la finesse, mais également de la complexité, de la description des processus physiques en jeu. De plus, la plupart de ces modèles se focalisent sur des processus de courtes durées (quelques milliers d'années au maximum), et négligent ainsi l'impact de la subsidence ou de la compaction sur la stratigraphie des bassins sédimentaires.

- les modèles stratigraphiques contrôlés par la pente sont idéaux pour les échelles de temps et d'espace considérées par la présente invention, mais sont dédiés aux systèmes carbonatés ou clastiques grossiers, ou mixtes, mais négligent les sédiments fins en suspension. L'utilisation d'une équation de diffusion de la topographie, permet de simuler l'évolution d'une topographie sur de grandes durées, et d'obtenir une description assez réaliste du transport des sédiments grossiers, mais est mal adaptée à la simulation du transport des particules fines, qui se déplacent principalement par advection et diffusion en domaine marin.

L'objet de l'invention concerne ainsi un procédé d'exploitation d'un bassin sédimentaire, dans lequel on construit une image décrivant la géométrie de couches géologiques formant le bassin et une répartition des sédiments au sein de ces couches au moyen d'une simulation stratigraphique. Cette simulation prend en compte le transport, dans le bassin sédimentaire, des sédiments fins (diamètre des grains de l'ordre de quelques dizaines de microns à quelques millimètres), à grossiers (diamètres des grains de l'ordre de quelques millimètres à quelques centimètres). Le procédé y parvient au moyen d'une discrétisation en couche homogène d'un point de vue des paramètres climatiques, et par une modélisation non linéaire du transport de sédiments en domaine continental et du transport de la couche de fond des sédiments en domaine marin et lacustre, et par une modélisation du transport en suspension en domaine marin et lacustre.

**Le procédé selon l'invention**

De façon générale, l'invention concerne un procédé d'exploitation d'un bassin sédimentaire, dans lequel on construit une image décrivant une géométrie de couches géologiques formant le bassin et une répartition de sédiments au sein des couches. Le procédé comporte les étapes suivantes :

- on décompose le bassin sédimentaire en couches géologiques, chaque couche correspondant à un dépôt de sédiment pendant une durée donnée ;

- on subdivise chaque couche géologique en une série de couches climatiques, chaque couche climatique étant associée à au moins un paramètre climatique constant ;

- on réalise une simulation stratigraphique itérative, du passé jusqu'à un temps plus récent, au sein de chaque couche climatique, au moyen d'un modèle stratigraphique dans lequel :

   ◦ on modélise un transport de sédiments en domaine continental à l'aide d'une première équation de diffusion non-linéaire contrainte par un taux d'érosion maximum ;

   ◦ on modélise un transport en suspension en domaine marin et lacustre à l'aide d'une équation d'advection et de diffusion, prenant en compte une vitesse de chute des particules et une vitesse des courants marins et lacustres ;

   ◦ on modélise un transport d'une couche de fond des sédiments en domaine marin et lacustre à l'aide d'une seconde équation de diffusion non-linéaire contrainte par un taux d'érosion maximum ;

- on homogénéise les couches climatiques appartenant à une même couche géologique ; et

- on exploite ledit bassin sédimentaire à partir de ladite image comportant les couches homogénéisées.

Selon un mode de réalisation, on définit des classes de sédiment composant le bassin sédimentaire, chaque classe correspondant à un ensemble de sédiments ayant une granulométrie et une origine donnée $\mu$. Dans ce mode, les équations de diffusion non-linéaire peuvent définir le flux de sédiment de classe k comme proportionnel au flux d'eau s'écoulant à la surface du sol ($q_{eau}$) à la puissance n, et à la pente locale du bassin (S) à la puissance m, avec n et m deux constantes différentes pour la première et la seconde équation de diffusion non-linéaire.

Ainsi, les équations de diffusion non-linéaire peuvent être de la forme :

$$\bar{q}_k = -\lambda\, c_k\, K_{fluv,k}\, q_{eau}^n \left\|\bar{S}\right\|^{m-1} \bar{S}$$

Avec:

- $q_k$, flux de sédiment de classe k ;

- $\lambda$, contrainte d'érosion ;

- $c_k$, concentration en sédiment de classe k dans l'écoulement ;

- $q_{eau}$, flux d'eau adimensionné s'écoulant dans le chenal ;

- S, pente locale du bassin ;

- K, coefficient de diffusion, avec : $K = K_{fluv,k}$ coefficient de diffusion fluviatile des sédiments de classe k, pour la première équation de diffusion non-linéaire, et $K = K_{m,k}$ coefficient de diffusion marin et lacustre des sédiments de classe k, pour la seconde équation de diffusion non-linéaire.

Selon ce mode de réalisation, on peut modéliser le transport en suspension en domaine marin et lacustre en écrivant une évolution d'une hauteur de sédiment de classe k dans le panache en suspension ($e_k$) en fonction d'une équation d'advection et équation de diffusion, prenant en compte une vitesse de chute des particules et une vitesse des courants marins et lacustres.

Ainsi, on peut modéliser le transport en suspension en domaine marin et lacustre au moyen de l'équation suivante :

Avec :

$$\frac{\partial e_k}{\partial t} = \underbrace{div(A\, grad\, e_k)}_{diffusion} + \underbrace{div(-e_k\, \bar{u})}_{advection} - \lambda_{s,k} e_k$$

- $e_k$, hauteur de sédiment de classe k dans le panache en suspension ;

- A, coefficient de diffusion du panache ;

- u, vitesse du courant marin ;

- $\lambda_{s,k}$, coefficient de chute des particules.

Selon l'invention, la simulation stratigraphique peut comporter une modélisation d'une déformation du bassin en réalisant une déformation de ladite couche climatique due à la subsidence tectonique et aux variations eustatiques, au moyen d'un logiciel de restauration fournissant un processus de construction et de restauration de modèles structuraux.

Selon l'invention, la simulation stratigraphique peut comporter une modélisation d'un apport de sédiments en déterminant un apport aux frontières du bassin et/ou une production ou une précipitation au sein du bassin, à partir de paramètres environnementaux, tels qu'une profondeur d'eau et une énergie des vagues, et à partir de paramètres climatiques, tels que la température, ou un taux d'évaporation.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

- La figure 1 représente un organigramme présentant le principe de décomposition d'un bassin sédimentaire en couches géologiques, chaque couche géologique étant subdivisée en couches climatiques, dont la modélisation est décrite sur la figure 2.

- La figure 2 représente un organigramme présentant l'ensemble des opérations à réaliser pour simuler l'évolution d'un bassin sédimentaire entre deux âges, et obtenir ainsi une nouvelle couche climatique telle que définie sur la figure 1.

- La figure 3 représente un organigramme détaillant la simulation des processus d'érosion, de transport et de sédimentation, nécessaire à la caractérisation d'une couche climatique.

- La figure 4 représente un organigramme composé d'une suite de schémas en 3D illustrant les grandes étapes de l'organigramme de la figure 3.

## Description détaillée du procédé

Le procédé selon l'invention permet de construire une image décrivant la géométrie des couches géologiques formant un bassin sédimentaire et la répartition des sédiments au sein de ces couches, en vue de l'exploitation du bassin sédimentaire. L'exploitation peut consister en une exploration pétrolière lors de l'étude de zones frontières, de l'évaluation de nouveaux champs, de la caractérisation de réservoirs pétroliers, ou de l'exploitation par extraction d'hydrocarbures de ces réservoirs. L'exploitation peut également consister au stockage géologique de gaz et fluides, tels que le $CO_2$ ou l'hydrogène.

L'image est construite par une méthode de simulation stratigraphique. La méthode de simulation selon l'invention permet d'obtenir une simulation stratigraphique déterministe sur de grandes durées (de l'ordre de la dizaine de milliers à la centaine de millions d'années), et sur de grandes distances (quelques dizaines à centaines de kilomètres), en 2D et en 3D, et de caractériser la géométrie des couches sédimentaires et la répartition des sédiments fins et grossiers au sein de ces couches.

Le procédé d'exploitation d'un bassin sédimentaire selon l'invention comporte les étapes suivantes :

A. Construction d'une image du bassin

1. Décomposition du bassin sédimentaire en couches géologiques.

2. Décomposition de chaque couche géologique en couches climatiques.

3. Simulation stratigraphique avec prise en compte du transport des sédiments fins.

4. Homogénéisation des couches climatiques.

B. Exploitation du bassin sédimentaire

1. Décomposition du bassin sédimentaire en couches géologiques

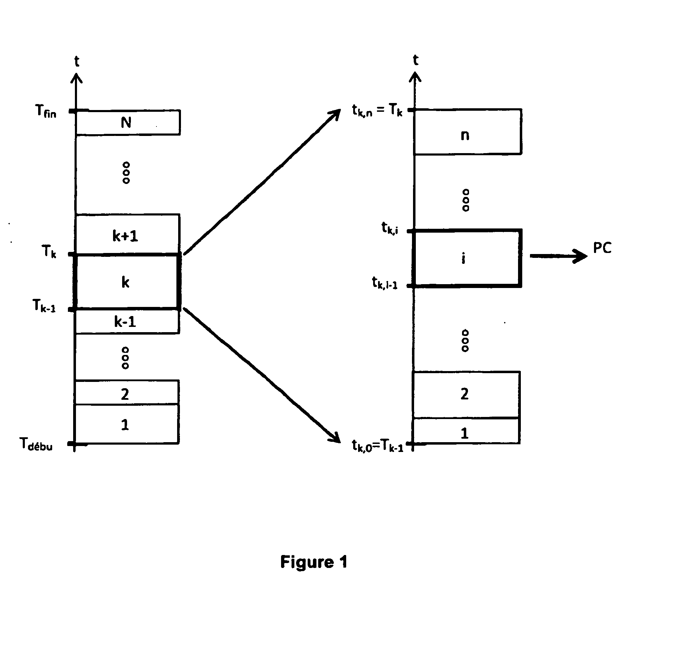

Une modélisation stratigraphique d'un bassin sédimentaire est obtenue itérativement du passé jusqu'au présent, ou au moins jusqu'à un temps plus récent, en une série de pas de temps variable, de l'ordre de quelques milliers d'années à quelques millions d'années (voir figure 1). Cette décomposition du bassin sédimentaire en couches géologiques de durée variable permet de représenter au mieux les hétérogénéités des couches sédimentaires, et en particulier de décrire à la fois des événements courts mais importants, tels que le dépôt d'évaporites lors de la crise messinienne (crise majeure en Mer Méditerranée ayant eu lieu il y a 5,3 millions d'années, et ayant duré au maximum 500 000 ans), et des événements beaucoup plus longs, tels que la formation du substrat de la Méditerranée avant cette crise messinienne (soit plus de 240 millions d'années d'histoire géologique). La figure 1 illustre à gauche la décomposition du bassin en couches géologiques, où t représente le temps, $T_{début}$ le temps de début de la simulation, $T_{fin}$ le temps de fin de simulation, et $T_k$ et $T_{k-1}$ sont des temps intermédiaires ; la couche k correspond à la période de temps entre ces deux temps intermédiaires.

2. Décomposition de chaque couche géologique en couches climatiques

Cependant, la durée de cette couche géologique est trop longue pour pouvoir appréhender en détail les variations climatiques au sein de cette couche, et qui ont pourtant un rôle majeur sur la stratigraphie. Nous citerons par exemple les cycles de Milankovitch d'une durée de 20 000 et 40 000 ans, qui ont contrôlé le dépôt d'une alternance de sédiments argileux riche en matière organique et de sédiments évaporitiques dans le bassin de Sorbas en Espagne, lors de la crise messinienne (Sierro *et al.*, 1999, Krijgsman *et al.*, 2001, Rohling *et al.*, 2008). Il est important de pouvoir appréhender cette variabilité climatique pour correctement décrire la répartition des sédiments dans le bassin. Chaque couche géologique est ainsi subdivisée en une série de couches climatiques (voir figure 1), au sein de laquelle on suppose les paramètres climatiques, tels que la pluie ou la direction d'approche et l'intensité des vagues, constants. Ces couches climatiques servent de support à la modélisation numérique décrite ci-après.
La figure 1 illustre à droite la décomposition de la couche géologique k en couches climatiques, où t représente le temps, $t_{k,i}$ sont des temps intermédiaires de la couche géologique k : la couche géologique k est ainsi divisée en n couches climatiques.

*Définition des paramètres climatiques (PC sur la figure 1).*

Les paramètres climatiques tels que la pluviométrie et le taux d'évaporation (définis par des cartes de pluviométrie et d'évaporation, ou des courbes reliant pluviométrie et évaporation à la topographie), et la direction d'approche et la force des vagues, sont définis et supposés constants pour la durée de cette couche.

3. Simulation stratigraphique avec prise en compte du transport des sédiments fins

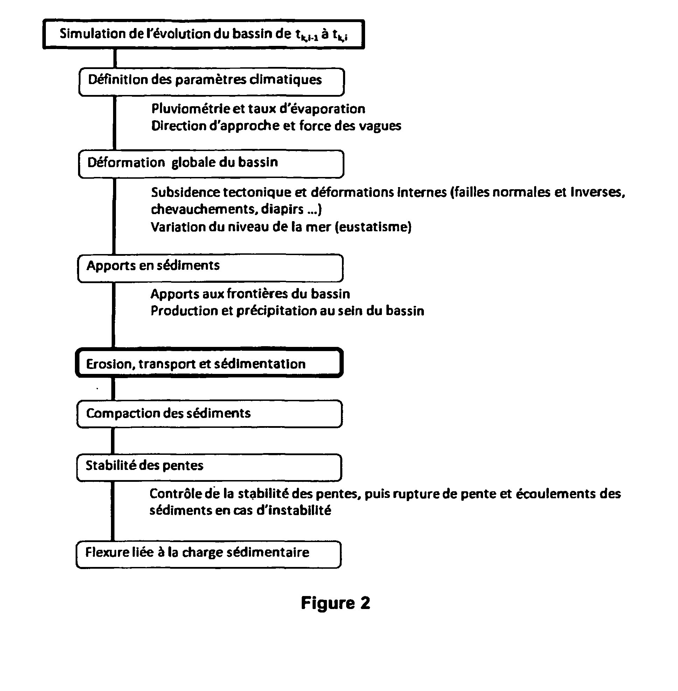

La simulation de chaque couche climatique suit l'organigramme présenté sur la figure 2. Au cours de cette étape, on réalise une simulation itérative, du passé jusqu'à un temps plus récent, au sein de chaque couche climatique, au moyen d'un modèle stratigraphique.
Selon l'invention, le modèle stratigraphique comporte les caractéristiques suivantes :

∘ on modélise le transport de sédiments en domaine continental à l'aide d'une équation de diffusion non-linéaire contrainte par un taux d'érosion maximum (le flux de chaque classe de sédiments est proportionnel au flux d'eau s'écoulant à la surface du sol, à la puissance n, et à la pente locale du bassin, à la puissance m, avec n et m deux constantes) ;

∘ on modélise le transport en suspension en domaine marin et lacustre à l'aide d'une équation d'advection et de diffusion, prenant en compte la vitesse de chute des particules (fonction de la granulométrie des sédiments et des processus de floculation) et la vitesse des courants marins et lacustres (définie en supposant que l'écoulement de l'eau est un écoulement à potentiel) ;

◦ on modélise le transport de la couche de fond des sédiments en domaine marin et lacustre à l'aide d'une équation de diffusion non-linéaire contrainte par un taux d'érosion maximum (le flux de chaque classe de sédiment est proportionnel au flux d'eau s'écoulant à la surface du sol, à la puissance n', et à la pente locale du bassin, à la puissance m', avec n' et m' deux constantes).

Ces spécificités du modèle stratigraphique sont décrites au point *iii.* de la description d'un modèle stratigraphique utilisé de façon préférentielle. De façon préférentielle, on utilise un modèle stratigraphique ayant les caractéristiques suivantes :

*i. Déformation globale du bassin*

Le modèle stratigraphique calcule la déformation globale du bassin due à la subsidence tectonique (définie point par point par des cartes), et aux variations eustatiques (variation du niveau de la mer définie par une courbe fonction du temps). De plus, les déformations internes induites par le jeu des failles normales ou inverses, les chevauchements et les diapirs sont pris en compte. Ces déformations structurales sont imposées par l'utilisateur qui définit le mouvement de chaque noeud du maillage stratigraphique en 3D (ce modèle structural est généralement obtenu grâce à un logiciel de restauration fournissant un processus de construction et de restauration des modèles structuraux, appelé géomodeleur, tel que Kine3D (IFP Energies nouvelles, France).

*ii. Apports en sédiments*

On suppose que les roches sédimentaires composant un bassin sédimentaire peuvent être décrites à l'aide d'un nombre fini de classe de sédiment. Chaque classe de sédiment correspond ainsi à un ensemble de sédiments ayant une granulométrie et une origine donnée. On distingue ainsi des sables grossiers, des coraux, des algues, des argiles et des évaporites. En chaque point du bassin, la lithologie des roches sédimentaires est ainsi décrite par le pourcentage de chaque classe de sédiment les composant. Une roche peut ainsi être composée de 43 % de sables grossiers et de 57 % d'argiles, et un autre de 65 % de coraux et de 35 % d'algues. Cette décomposition en un nombre fini de sédiment permet de simuler l'évolution de chaque sédiment indépendamment l'un de l'autre, depuis son origine jusqu'à son dépôt.

Les apports en sédiments peuvent correspondre (1) à un apport aux frontières du bassin (définition du flux de chaque sédiment à la frontière), ou (2) à une production ou une précipitation au sein du bassin, fonction des paramètres environnementaux (profondeur de l'eau, énergie des vagues, ...), et climatiques (température, taux d'évaporation ...).

*iiii.. Érosion, transport et dépôt des sédiments*

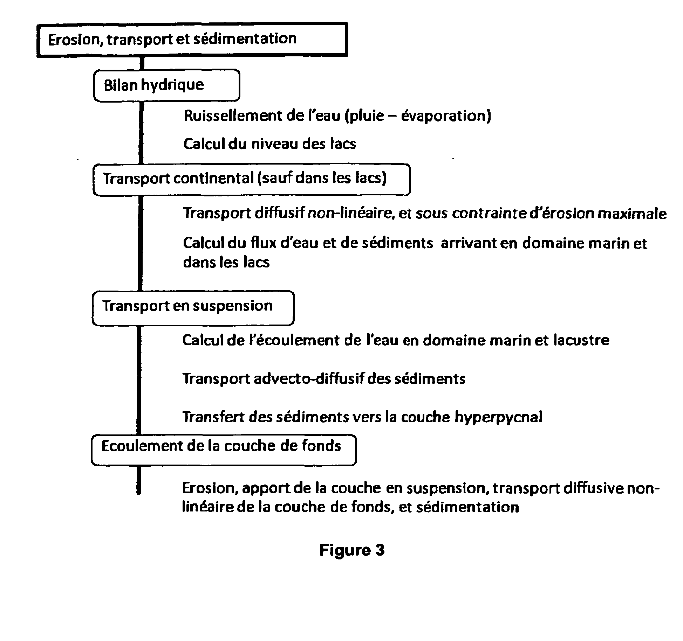

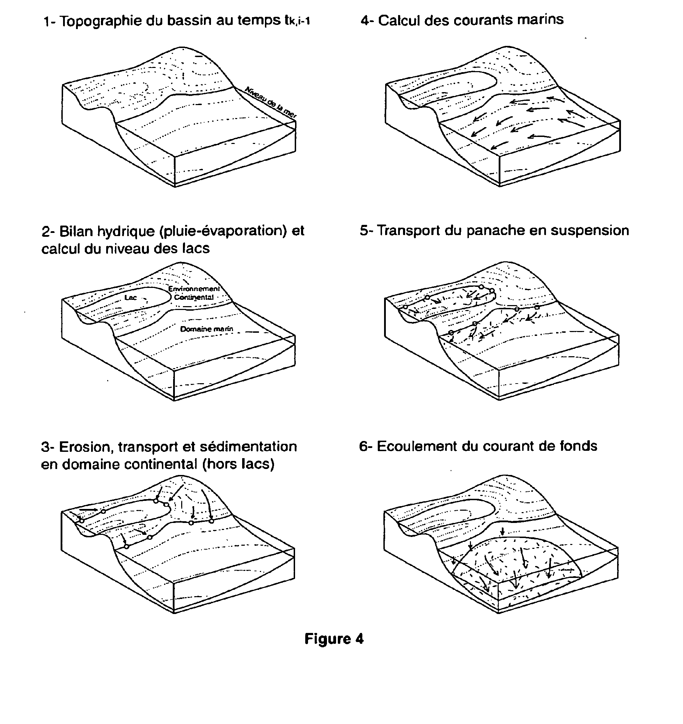

Cette partie est propre au modèle stratigraphique selon l'invention. La simulation selon l'invention des processus de transport des sédiments (voir l'organigramme figure 3, et les schémas figure 4) permet de prendre en compte les sédiments fins.

**a) Domaine d'étude**

Le but de la méthode est de simuler l'évolution de bassin sédimentaire, c'est-à-dire de déterminer en tout point x du bassin $\Omega$ (avec $\Omega$ un espace fermé de $R^d$, avec d=1 ou 2), les variations au cours du temps t de la nature lithologique et de l'épaisseur h(x,t) de chaque couche sédimentaire.

**b) Bilan hydrique (Figure 4.2)**

La réalisation du bilan hydrique commence par une analyse de la topographie du bassin afin de définir la localisation des lacs potentiels. Ensuite, on définit la pluie et l'évaporation en tout point du bassin, soit en les supposant constantes, soit en les définissant à l'aide de cartes ou de courbes reliant par exemple ces paramètres à l'altitude du sol. On calcule ensuite le ruissellement de l'eau dans le bassin en supposant que l'écoulement de l'eau est permanent. Ce calcul se fait de l'amont vers l'aval en supposant que toute l'eau arrivant en un point donné du bassin est redistribuée vers tous ses voisins en aval, au prorata de la pente (le voisin ayant la pente la plus forte recevra ainsi plus d'eau que les autres) (méthode dite « Multiple Flow Direction »), ou se répand à la surface du lac et s'échappe par le seuil topographique délimitant la sortie avale du lac. Ce bilan hydrique permet de définir en tout point du bassin le flux d'eau, $Q_{eau}$ en $m^3/s$, qui ruisselle à la surface du sol.

**c) Transport continental (sauf dans les lacs) (Figure 4.3)**

Le flux de sédiment s'écoulant en tout point continental du bassin est ensuite calculé. Ce flux est défini par un modèle diffusif non-linéaire, fonction de la pente locale du bassin et du flux d'eau ruisselant à la surface du sol. Chaque classe de sédiment est transportée séparément : le flux, $q_k$, de chacune d'elles est supposé (1) proportionnel à la concentration en sédiment dans l'écoulement, à la pente locale et au flux d'eau et (2) parallèle à la pente locale.

$$\vec{q}_k = -c_k\, K_{fluv,k}\, q_{eau}^n\, \left\|\vec{S}\right\|^{m-1}\, \vec{S}$$

Avec:

- $q_k$ [L²/T ], flux de sédiment de classe k. Le vecteur $\vec{q}_k$ est parallèle à la pente ;
- $c_k$ [-], concentration en sédiment de classe k dans l'écoulement ;
- $K_{fluv,k}$ [L²/T], coefficient de diffusion fluviatile des sédiments k ;
- $q_{eau}$ [-], flux d'eau adimensionné s'écoulant dans le chenal (flux d'eau en m³/s, divisé par un flux d'eau de référence, égal à 100 m³/s) ;
- $S$ [-], pente locale du bassin (ou gradient de la topographie) ;
- n, m [-], constantes.

Le flux, $q_k$, entrant ou sortant du bassin $\Omega$ est imposé par l'utilisateur en tout point de la frontière de $\Omega$.

Les observations des systèmes naturels actuels et anciens permettent de donner un ordre de grandeur pour les constantes n et m qui sont en général entre 1 et 2. Mais leurs valeurs précises dépendent du cas d'étude (taille du bassin étudiée, climat, ...), et surtout de la période de temps simulée. Pour déterminer une valeur précise, on peut réaliser une inversion. En règle générale, on prend des exposants non-linéaires (n=m=3/2), lorsque la durée de la simulation est plus petite que le temps d'équilibre des systèmes sédimentaires (de l'ordre du million d'année), et qu'on s'intéresse à l'impact des variations climatiques sur la stratigraphie. A l'opposé, on prend des exposants linéaires (n=m=1), lorsque la durée de simulation est plus grande que le temps d'équilibre, et qu'on s'intéresse par exemple à la mise en place d'une chaîne de montagnes sur plusieurs dizaines de millions d'années.

L'application du principe de conservation de la masse, couplée à un terme de production locale de sédiment de classe k, permet de définir le taux de sédimentation, dh/dt, ou d'érosion si dh/dt<0, de chaque classe de sédiment en chaque point du domaine continental, et d'en déduire ainsi le taux de sédimentation ou d'érosion global de la topographie.

$$(1-\phi_s)\, c_{k,s}\, \frac{\partial h}{\partial t} = P_k - \vec{\nabla}\cdot\vec{q_k}$$

Avec:

- $\Phi_s$ [-], porosité des sédiments proche de la surface du sol ;
- $c_{k,s}$ [- ], concentration en sédiment k proche de la surface du sol ;
- h [L], épaisseur totale de sédiment ;
- $P_k$ [L/T], production locale de sédiment k ;
- $q_k$ [L²/T ], flux de sédiment de classe k.

Dans le cas d'un taux d'érosion (dh/dt négatif), on suppose que ce taux ne peut pas dépasser un taux d'érosion maximal E dépendant de la nature lithologique du sol. Des sables fins seront ainsi plus faciles à éroder que des carbonates indurés. Afin de respecter cette contrainte sur le taux d'érosion, on suppose que le flux de chaque classe de sédiment est définie par l'équation de diffusion non-linéaire décrite ci-avant, dans laquelle on a ajouté un coefficient multiplicateur $\lambda$, qui permet de satisfaire la contrainte d'érosion :

$$(1-\phi_s)\frac{\partial h}{\partial t} \geq -E \Leftrightarrow \bar{q}_k = -\lambda_{c_k} K_{fluv,k} q_{eau}^n \left\|\bar{S}\right\|^{m-1} \bar{S}$$

- $\lambda$ [-], contrainte d'érosion, le plus grand possible, et compris entre 0 et 1.

Nous obtenons également le flux d'eau et de chaque classe de sédiment arrivant à la frontière r des domaines lacustres et marins (à noter que plusieurs lacs ou domaines marins peuvent coexister au même moment dans le modèle). Ces paramètres sont utilisés comme conditions limites au modèle en suspension décrit ci-après.

**d) Transport en suspension**

En chaque point de la frontière r entre le (ou les) domaine continental et les domaines lacustres et marins, le flux de sédiment vient nourrir un panache en suspension, qui est transporté de manière advective et diffusive par les courants lacustres et marins. Dans un premier temps, on calcule ces courants en supposant que l'écoulement de l'eau est irrotationnel et en négligeant la viscosité de l'eau (figure 4.4). On suppose ainsi que l'écoulement de l'eau est un écoulement à potentiel :

$$\frac{\partial}{\partial x}\left(b\frac{\partial H}{\partial x}\right) + \frac{\partial}{\partial y}\left(b\frac{\partial H}{\partial y}\right) = 0$$

- $b$ [L ], profondeur de l'eau ;

- $H$ [L], potentiel hydraulique ;
  $\bar{u} = -\overline{grad}\, H$ ;

- $u$ [L/T ], vitesse du courant marin ;

- $H$ [L], potentiel hydraulique.

Chaque classe de sédiment est ensuite transportée séparément dans ce panache, afin de prendre en compte sa vitesse de chute (Figure 4.5). Cette vitesse de chute est définie en fonction de la granulométrie caractéristique de cette lithologie, et des éventuels processus de floculation pouvant intervenir à la frontière entre le domaine continental et les domaines lacustres et marins. Le panache en suspension est supposé en équilibre : la variation de la hauteur du panache tend vers 0 en tout point du bassin. Les sédiments entrant dans le panache (le flux entrant de sédiment est défini par l'équation de transport fluvial décrite précédemment), sont ainsi tous redistribués dans ce panache par les courants et la diffusion, puis sortent du panache et viennent nourrir les courants de fond décrits dans le paragraphe suivant.

$$\frac{\partial e_k}{\partial t} = \underbrace{div(A\,grad\,e_k)}_{diffusion} + \underbrace{div(-e_k\,\bar{u})}_{advection} - \lambda_{s,k}e_k \rightarrow 0$$

- $e_k$ [L ], hauteur de lithologie k dans le panache en suspension ;

- $A$ [$L^2$/T ], coefficient de diffusion du panache ;

- $u$ [L/T ], vitesse du courant marin (= vitesse d'advection du panache) ;

- $\lambda_{s,k}$ [$T^{-1}$ ], coefficient de chute des particules, proportionnel à la vitesse de chute de ces particules ;

Dans le cas de sédiment ayant une forte vitesse de chute (typiquement supérieure à 0.1 mm/s), le transport en suspension pourra être négligé du fait de la sortie très rapide des sédiments du panache en suspension.

**e) Transport de la couche de fond**

La couche de fond est un écoulement fluide (eau+sédiment), plus dense que l'eau de mer. On l'appelle également "écoulement hyperpycnal", pour indiquer que la densité est plus forte que l'eau ambiante.

L'écoulement de la couche de fond (Figure 4.6) est supposé régi par une équation de diffusion non-linéaire, à l'instar de l'écoulement fluvial. Le flux de chaque classe de sédiment est supposé proportionnel à la contrainte d'érosion, à un coefficient de diffusion, au flux d'eau et à la pente locale.

$$\vec{q}_k = -\lambda\, c_k\, K_{m,k}\, q_{eau}^{n'} \left\| \vec{S} \right\|^{m'-1} \vec{S} \quad ;$$

- $q_k$ [L²/T ], flux de sédiment k ;

- $\lambda$ [-], contrainte d'érosion ;

- $c_k$ [- ], concentration en sédiment de classe k dans l'écoulement ;

- $K_{m,k}$ [L²/T ], coefficient de diffusion marin et lacustre de la lithologie k ;

- $q_{eau}$ [-], flux d'eau adimensionné s'écoulant dans le chenal (flux d'eau en m³/s, divisé par un flux d'eau de référence, égal à 100 m³/s) ;

- $S$ [-], pente locale du bassin (ou gradient de la topographie) ;

- n', m' [-], constantes (différentes de n et m).

Les observations des systèmes naturels actuels et anciens permettent de donner un ordre de grandeur pour les constantes n' et m' qui sont en général entre 1 et 2. Comme dans le cas fluviatile, ces paramètres sont définis à l'aide d'une étude de sensibilité.

L'application de la conservation de la masse, couplée à un terme local de production (cas des carbonates marins par exemple), et à un terme source correspond au flux de sédiment s'échappant du panache en suspension, permet de définir le taux de sédimentation ou d'érosion en chaque point lacustre et marin.

$$(1 - \phi_s)\, c_{ks} \frac{\partial h}{\partial t} = P_k + \lambda_{s,k} e_k - \vec{\nabla} \cdot \vec{q_k}$$

*iv. Compaction des sédiments*

Après le dépôt de cette nouvelle couche climatique, ainsi que de l'érosion des anciennes, on calcule la compaction mécanique induite par cette modification de l'enfouissement. On considère que les propriétés mécaniques d'un sédiment sont définies à partir des caractéristiques de chaque lithologie le composant, en pondérant le poids de chaque lithologie par sa concentration dans le sédiment étudié. Pour rendre compte de la compaction mécanique, on relie directement la porosité de chaque lithologie à l'enfouissement maximal atteint par les sédiments, en utilisant une relation de forme exponentielle, telle que décrite dans :

Parasnis, D.S., 1960. The compaction of sédiments and its bearing on some geophysical problems. Journal of the Royal Astronomical Society 3, 1, 1-28.

*v. Stabilité des pentes*

On détermine ensuite les zones instables du bassin en appliquant un critère de pente critique. Cette pente critique varie localement et dépend de la nature lithologique des sédiments dans le sol. Toute zone instable, i.e. toute portion d'une colonne sédimentaire située au-dessus du plan de stabilité défini par la pente critique, est déplacée en masse en appliquant l'équation de Newton : on calcule l'accélération de la masse instable en faisant un bilan des forces s'appliquant sur cette masse, la gravité et la friction. Cette équation permet de simuler le mouvement en masse de la zone instable, puis son dépôt quand sa vitesse chute en dessous d'une valeur critique.

*vi. Flexure liée à la charge sédimentaire*

Une fois la nouvelle couche sédimentaire définie, on calcule son impact sur la déformation du bassin. En effet, en chaque point du bassin, la colonne sédimentaire, ainsi que la colonne d'eau de mer si le point considéré est en domaine marin, crée une pression sur la lithosphère, que l'on suppose élastique. Toute variation de pression induit une déformation flexurale du bassin sédimentaire, que l'on calcule en résolvant l'équation d'une poutre élastique en 2D.

### 4. Homogénéisation des couches climatiques

Les couches climatiques sont ensuite homogénéisées afin de former des couches géologiques. Cette double décomposition en couches géologiques et en couches climatiques permet de modéliser l'évolution d'un bassin sédimentaire en détail (couches climatiques), tout en ne préservant qu'un maillage "grossier" (couches géologiques), mais pertinent pour décrire les hétérogénéités des sédiments.

### 5. Exploration et exploitation du bassin sédimentaire

Le modèle diffusif non-linéaire selon l'invention, avec prise en compte du panache en suspension, permet d'obtenir des simulations très précises de la stratigraphie des bassins sédimentaires, c'est-à-dire de la géométrie des couches sédimentaires et de la distribution des lithologies au sein de ces couches. En particulier, du fait de la prise en compte du panache en suspension, le modèle diffusif non-linéaire selon l'invention permet de mieux décrire les hétérogénéités des couches sédimentaires et de correctement estimer la répartition des sédiments fins et grossiers au sein d'un bassin sédimentaire.

Le modèle stratigraphique diffusif non-linéaire peut être utilisé lors de l'exploration de zones frontières de bassins sédimentaires, de l'évaluation de nouveaux champs, de la caractérisation de réservoirs pétroliers, ou de l'exploitation par extraction d'hydrocarbures de ces réservoirs. L'exploitation peut également consister au stockage géologique de gaz et fluides, tels que le $CO_2$ ou l'hydrogène.

L'utilisation du modèle requiert la connaissance de trois grands paramètres : la déformation du bassin au cours du temps, les apports en sédiments et le transport de ces sédiments dans le bassin. En fonction du degré de connaissance du bassin étudié et des données disponibles, deux méthodes extrêmes pourront être utilisées. En l'absence de données géologiques provenant d'affleurement, de puits ou de sismiques (cas de l'exploration des zones frontières), les paramètres requis par la méthode peuvent être issus de modèles conceptuels : la déformation du bassin est définie par un schéma structural validé par une modélisation thermo-mécanique des mouvements lithosphériques, les apports en sédiments, mais également la pluviométrie et l'évaporation sont définis en se référant aux zones climatiques actuelles, et les paramètres de transport sont supposés équivalents à ceux des fleuves actuels. A l'opposé, dans le cas de l'évaluation de nouveaux champs, de nombreuses données sont déjà disponibles : la déformation du bassin et les variations du niveau de la mer sont définies par une méthode de backstripping comme en modélisation de bassin (*type Temis*), les apports sont estimés à partir des données en divisant le volume de sédiment déposé par la durée de la sédimentation, et les paramètres de transport sont estimés à partir des profils de dépôts supposés. La valeur de chacun de ces paramètres est ensuite affinée à l'aide d'une boucle d'inversion.

### Revendications

**1.** Procédé d'exploitation d'un bassin sédimentaire, dans lequel on construit une image décrivant une géométrie de couches géologiques formant ledit bassin et une répartition de sédiments au sein desdites couches, **caractérisé en ce que** :

> - on décompose le bassin sédimentaire en couches géologiques, chaque couche correspondant à un dépôt de sédiment pendant une durée donnée ;
> - on subdivise chaque couche géologique en une série de couches climatiques, chaque couche climatique étant associée à au moins un paramètre climatique constant ;
> - on réalise une simulation stratigraphique itérative, du passé jusqu'à un temps plus récent, au sein de chaque couche climatique, au moyen d'un modèle stratigraphique dans lequel :

> > ∘ on modélise un transport de sédiments en domaine continental à l'aide d'une première équation de diffusion non-linéaire contrainte par un taux d'érosion maximum ;

∘ on modélise un transport en suspension en domaine marin et lacustre à l'aide d'une équation d'advection et de diffusion, prenant en compte une vitesse de chute des particules et une vitesse des courants marins et lacustres ;

∘ on modélise un transport d'une couche de fond des sédiments en domaine marin et lacustre à l'aide d'une seconde équation de diffusion non-linéaire contrainte par un taux d'érosion maximum ;

- on homogénéise les couches climatiques appartenant à une même couche géologique ; et
- on exploite ledit bassin sédimentaire à partir de ladite image comportant les couches homogénéisées.

2. Procédé selon la revendication 1, dans lequel on définit des classes de sédiment composant le bassin sédimentaire, chaque classe correspondant à un ensemble de sédiments ayant une granulométrie et une origine donnée, et dans lequel les équations de diffusion non-linéaire définissent le flux de sédiment de classe k comme proportionnel au flux d'eau s'écoulant à la surface du sol ($q_{eau}$) à la puissance n, et à la pente locale du bassin (S) à la puissance m, avec n et m deux constantes différentes pour la première et la seconde équation de diffusion non-linéaire.

3. Procédé selon la revendication 2, dans lequel les équations de diffusion non-linéaire sont de la forme :

$$\vec{q}_k = -\lambda \; c_k \; K_{fluv,k} \; q_{eau}^n \; \left\| \vec{S} \right\|^{m-1} \vec{S}$$

Avec :

- $q_k$, flux de sédiment de classe k ;
- $\lambda$, contrainte d'érosion ;
- $c_k$, concentration en sédiment de classe k dans l'écoulement;
- $q_{eau}$, flux d'eau adimensionné s'écoulant dans le chenal ;
- S, pente locale du bassin ;
- K, coefficient de diffusion, avec : K = $K_{fluv,k}$ coefficient de diffusion fluviatile des sédiments de classe k, pour la première équation de diffusion non-linéaire, et K = $K_{m,k}$ coefficient de diffusion marin et lacustre des sédiments de classe k, pour la seconde équation de diffusion non-linéaire.

4. Procédé selon l'une des revendications 2 et 3, dans lequel on modélise le transport en suspension en domaine marin et lacustre en écrivant une évolution d'une hauteur de sédiment de classe k dans le panache en suspension ($e_k$) en fonction d'une équation d'advection et équation de diffusion, prenant en compte une vitesse de chute des particules et une vitesse des courants marins et lacustres.

5. Procédé selon la revendication 4, dans lequel on modélise le transport en suspension en domaine marin et lacustre au moyen de l'équation suivante :

$$\frac{\partial e_k}{\partial t} = \underbrace{div(A \; grad \; e_k)}_{diffusion} + \underbrace{div(-e_k \; \vec{u})}_{advection} - \lambda_{s,k} e_k$$

Avec:

- $e_k$, hauteur de sédiment de classe k dans le panache en suspension ;
- A, coefficient de diffusion du panache ;
- u, vitesse du courant marin ;
- $\lambda_{s,k}$, coefficient de chute des particules.

6. Procédé selon l'une des revendications précédentes, dans lequel la simulation stratigraphique comporte une modélisation d'une déformation du bassin en réalisant une déformation de ladite couche climatique due à la subsidence tectonique et aux variations eustatiques, au moyen d'un logiciel de restauration fournissant un processus de construction et de restauration de modèles structuraux.

**7.** Procédé selon des revendications précédentes, dans lequel la simulation stratigraphique comporte une modélisation d'un apport de sédiments en déterminant un apport aux frontières du bassin et/ou une production ou une précipitation au sein du bassin, à partir de paramètres environnementaux, tels qu'une profondeur d'eau et une énergie des vagues, et à partir de paramètres climatiques, tels que la température, ou un taux d'évaporation.

**Patentansprüche**

**1.** Verfahren zur Erschließung eines Sedimentbeckens, in dem ein Bild konstruiert wird, das eine Geometrie von geologischen Schichten, die das Becken bilden, und eine Verteilung von Sedimenten in den Schichten beschreibt, **dadurch gekennzeichnet, dass**:

- das Sedimentbecken in geologische Schichten zerlegt wird, wobei jede Schicht einer Sedimentablagerung während einer gegebenen Zeitdauer entspricht;
- jede geologische Schicht in eine Reihe von klimatischen Schichten unterteilt wird, wobei jede klimatische Schicht mindestens einem konstanten Klimaparameter zugeordnet ist;
- eine iterative stratigrafische Simulation von der Vergangenheit bis zu einer neueren Zeit in jeder klimatischen Schicht mit Hilfe eines stratigrafischen Modells durchgeführt wird, bei der:

  * ein Transport von Sedimenten im Kontinentalbereich mit Hilfe einer ersten nicht linearen Diffusionsgleichung, definiert durch eine maximale Erosionsrate, modelliert wird;
  * ein Transport in Suspension im Meeres- und Seenbereich mit Hilfe einer Advektions- und Diffusionsgleichung modelliert wird, die eine Absenkgeschwindigkeit der Partikel und eine Geschwindigkeit der Meeres- und Seenströme berücksichtigt;
  * ein Transport einer Bodenschicht der Sedimente im Meeres- und Seenbereich mit Hilfe einer zweiten nicht linearen Diffusionsgleichung, definiert durch eine maximale Erosionsrate, modelliert wird;

- die klimatischen Schichten, die einer selben geologischen Schicht angehören, homogenisiert werden; und
- das Sedimentbecken aus dem Bild, umfassend die homogenisierten Schichten, erschlossen wird.

**2.** Verfahren nach Anspruch 1, bei dem Sedimentklassen, aus denen das Sedimentbecken besteht, definiert werden, wobei jede Sedimentklasse einer Gesamtheit von Sedimenten entspricht, die eine gegebene Granulometrie und einen gegebenen Ursprung haben, und bei dem die nicht linearen Diffusionsgleichungen den Sedimentstrom der Klasse k als proportional zum Wasserstrom definieren, der auf der Oberfläche des Bodens ($q_{eau}$) mit der Leistung n und am lokalen Gefälle des Beckens (S) mit der Leistung m fließt, wobei n und m zwei unterschiedliche Konstanten für die erste und die zweite nicht lineare Diffusionsgleichung sind.

**3.** Verfahren nach Anspruch 2, bei dem die nicht linearen Diffusionsgleichungen folgende Form haben:

$$\vec{q}_k = -\lambda c_k K_{flux,k} q_{eau}^n \left\| \vec{S} \right\|^{m-1} \vec{S}$$

wobei:

* $q_k$ der Sedimentstrom der Klasse k ist;
* A die Erosionsvorgabe ist;
* $c_k$ die Sedimentkonzentration der Klasse k beim Fließen ist;
* $q_{eau}$ der adimensionale Wasserstrom ist, der in der Rinne fließt;
* S das lokale Gefälle des Beckens ist,
* K der Diffusionskoeffizient ist, wobei K = $K_{flux,k}$ der fluviatile Diffusionskoeffizient der Sedimente der Klasse k für die erste nicht lineare Diffusionsgleichung ist, und K = $K_{m,k}$ der Meeres- und Seendiffusionskoeffizient der Sedimente der Klasse k für die zweite nicht lineare Diffusionsgleichung ist.

**4.** Verfahren nach einem der Ansprüche 2 und 3, bei dem der Transport in Suspension im Meeres- und Seenbereich modelliert wird, wobei eine Entwicklung einer Sedimenthöhe der Klasse k in dem in Suspension befindlichen Feld ($e_k$) in Abhängigkeit von einer Advektionsgleichung und Diffusionsgleichung geschrieben wird, unter Berücksichtigung einer Absenkgeschwindigkeit der Partikel und einer Geschwindigkeit der Meeres- und Seenströme.

5. Verfahren nach Anspruch 4, bei dem der Transport in Suspension im Meeres- und Seenbereich mit Hilfe der folgenden Gleichung modelliert wird:

$$\frac{\partial e_k}{\partial t} = \underbrace{div(A\ grad\ e_k)}_{diffusion} + \underbrace{div(-e_k \vec{u})}_{advektion} - \lambda_{s,k} e_k$$

wobei:

* $e_k$ die Sedimenthöhe der Klasse k in dem in Suspension befindlichen Feld ist;
* A ein Diffusionskoeffizient des Feldes ist;
* u die Geschwindigkeit des Meeresstroms ist;
* $\lambda_{c,k}$ der Absenkkoeffizient der Partikel ist.

6. Verfahren nach einem der vorhergehenden Ansprüche, bei dem die stratigrafische Simulation eine Modellierung einer Verformung des Beckens umfasst, wobei eine Verformung der klimatischen Schicht auf Grund der tektonischen Subsidenz und der eustatischen Variationen mit Hilfe einer Wiederherstellungssoftware erstellt wird, die einen Konstruktions- und Wiederherstellungsprozess von Strukturmodellen liefert.

7. Verfahren nach den vorhergehenden Ansprüchen, bei dem die stratigrafische Simulation eine Modellierung einer Zuführung von Sedimenten umfasst, wobei eine Zuführung zu den Grenzen des Beckens und/oder eine Produktion oder Ausfällung in dem Becken auf Basis von Umweltparametern, wie einer Wassertiefe und einer Wellenenergie, und auf Basis von Klimaparametern, wie der Temperatur oder einer Verdampfungsrate, bestimmt werden.

**Claims**

1. A sedimentary basin development method, wherein an image describing a geometry of geologic layers forming said basin and a distribution of the sediments within said layers is constructed, **characterized in that** it comprises:

- breaking up the sedimentary basin into geologic layers, each geologic layer corresponding to a sediment deposition for a given time period,
- subdividing each geologic layer into a series of climatic layers, each climatic layer being associated with at least one constant climatic parameter,
- carrying out an iterative stratigraphic simulation, from the past to a more recent time, within each climatic layer using a stratigraphic model wherein:

  ∘ a sediment transport in the continental domain is modelled using a first nonlinear diffusion equation under maximum erosion rate constraint,
  ∘ a suspended sediment transport in the marine and lacustrine domain is modeled using an advection-diffusion equation taking account of a particle fall rate and of a marine and lacustrine current velocity,
  ∘ a sediment bottom layer transport in the marine and lacustrine domain is modelled using a second nonlinear diffusion equation under maximum erosion rate constraint,

- homogenizing the climatic layers belonging to a single geologic layer, and
- developing said sedimentary basin from said image comprising the homogenized layers.

2. A method as claimed in claim 1, wherein sediment classes making up the sedimentary basin are defined, each class corresponding to a set of sediments having a given grain size and origin, and wherein the nonlinear diffusion equations define the flux of sediment of class k as proportional to the water stream flowing at the surface of the ground ($q_{eau}$) to the power of n, and to the local slope of the basin (S) to the power of m, with n and m two different constants for the first and the second nonlinear diffusion equation.

3. A method as claimed in claim 2, wherein the nonlinear diffusion equations have the form as follows:

$$\vec{q}_k = -\lambda \, c_k \, K_{fluv,k} \, q_{eau}^n \left\| \vec{S} \right\|^{m-1} \vec{S}$$

with:

- $q_k$ sediment flux of class k
- $\lambda$ erosion constraint
- $C_k$ concentration in sediments of class k in the flow
- $q_{eau}$ dimensionless water stream flowing in the channel
- S local slope of the basin
- K diffusion coefficient, with: K = $K_{fluv,k}$ fluvial diffusion coefficient of the sediments of class k, for the first nonlinear diffusion equation, and K = $K_{m,k}$ marine and lacustrine diffusion coefficient of the sediments of class k, for the second nonlinear diffusion equation.

4. A method as claimed in any one of claims 2 and 3, wherein the suspended sediment transport in the marine and lacustrine domain is modelled by writing an evolution of a height of sediment of class k in the suspended plume ($e_k$) as a function of an advection equation and a diffusion equation taking account of a particle fall rate and of a velocity of the marine and lacustrine currents.

5. A method as claimed in claim 4, wherein the suspended transport in the marine and lacustrine domain is modelled by means of the equation as follows:

$$\frac{\partial e_k}{\partial t} = \underbrace{div\left(A \, grad \, e_k\right)}_{diffusion} + \underbrace{div\left(-e_k \, \vec{u}\right)}_{advection} - \lambda_{s,k} e_k$$

with:

- $e_k$ height of sediment of class k in the suspended plume
- A diffusion coefficient of the plume
- u marine current velocity
- $\lambda_{s,k}$ particle fall coefficient.

6. A method as claimed in any one of the previous claims, wherein stratigraphic simulation comprises modelling a basin deformation by performing a deformation of said climatic layer due to tectonic subsidence and to eustatic variations, using a restoration software providing a construction and restoration process for structural models.

7. A method as claimed in any one of the previous claims, wherein stratigraphic simulation comprises modelling a sediment supply by determining a supply at the basin boundaries and/or a production or a precipitation within the basin, from environmental parameters, such as a water depth and a wave energy, and from climatic parameters, such as the temperature or an evaporation rate.

**Figure 1**

**Simulation de l'évolution du bassin de $t_{k,i-1}$ à $t_{k,i}$**

**Définition des paramètres climatiques**

Pluviométrie et taux d'évaporation
Direction d'approche et force des vagues

**Déformation globale du bassin**

Subsidence tectonique et déformations internes (failles normales et Inverses, chevauchements, diapirs ...)
Variation du niveau de la mer (eustatisme)

**Apports en sédiments**

Apports aux frontières du bassin
Production et précipitation au sein du bassin

**Erosion, transport et sédimentation**

**Compaction des sédiments**

**Stabilité des pentes**

Contrôle de la stabilité des pentes, puis rupture de pente et écoulements des sédiments en cas d'instabilité

**Flexure liée à la charge sédimentaire**

**Figure 2**

Erosion, transport et sédimentation

Bilan hydrique

Ruissellement de l'eau (pluie – évaporation)

Calcul du niveau des lacs

Transport continental (sauf dans les lacs)

Transport diffusif non-linéaire, et sous contrainte d'érosion maximale

Calcul du flux d'eau et de sédiments arrivant en domaine marin et dans les lacs

Transport en suspension

Calcul de l'écoulement de l'eau en domaine marin et lacustre

Transport advecto-diffusif des sédiments

Transfert des sédiments vers la couche hyperpycnal

Ecoulement de la couche de fonds

Erosion, apport de la couche en suspension, transport diffusive non-linéaire de la couche de fonds, et sédimentation

**Figure 3**

1- Topographie du bassin au temps $t_{k,i-1}$

4- Calcul des courants marins

2- Bilan hydrique (pluie-évaporation) et calcul du niveau des lacs

5- Transport du panache en suspension

3- Erosion, transport et sédimentation en domaine continental (hors lacs)

6- Ecoulement du courant de fonds

**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1435527 A

**Littérature non-brevet citée dans la description**

- **PARASNIS, D.S.** The compaction of sédiments and its bearing on some geophysical problems. *Journal of the Royal Astronomical Society,* 1960, vol. 3 (1), 1-28